# FASCICULE DE BREVET EUROPEEN

(11) **EP 3 781 791 B1**
(45) Date de publication et mention de la délivrance du brevet: **13.09.2023**
(21) Numéro de dépôt: 19745681.7
(22) Date de dépôt: 12.06.2019
(51) Int. Cl.: F01D 5/14, F01D 11/00

(54) **DISTRIBUTEUR DE TURBINE POUR TURBOMACHINE, COMPRENANT UN SYSTÈME PASSIF DE RÉINTRODUCTION DE GAZ DE FUITE DANS UNE VEINE D'ÉCOULEMENT DES GAZ**
TURBINENLEITSCHAUFEL UMFASSEND EIN PASSIVES SYSTEM ZUM WIEDEREINLEITEN VON LECKGAS IN DEN GASPFAD
GAS TURBINE VANE HAVING A PASSIVE SYSTEM FOR REINJECTING LEAKAGE GAS INTO THE GAS PATH

(30) Priorité: 15.06.2018 FR 1855264
(43) Date de publication de la demande: 24.02.2021
(73) Titulaire: SAFRAN AIRCRAFT ENGINES, 75015 Paris (FR)
(72) Inventeur: PINTAT, Ludovic, 77550 MOISSY-CRAMAYEL (FR)
(74) Mandataire: Brevalex
(86) Numéro de dépôt international: PCT/FR2019/051416
(87) Numéro de publication internationale: WO 2019/239064

(56) Documents cités:
- FR-A5- 2 166 494
- JP-A- S55 146 201
- US-A1- 2009 263 233
- US-A1- 2009 317 232
- US-A1- 2013 064 673
- US-A1- 2014 023 483

## Description

### DOMAINE TECHNIQUE

L'invention concerne le domaine des turbines pour turbomachine, de préférence pour aéronef, et en particulier le domaine des distributeurs de turbine. Elle s'applique à tout type de turbomachine, tel que par exemple un turboréacteur ou un turbopropulseur.

### ETAT DE LA TECHNIQUE ANTERIEURE

Les turbines de turbomachine sont classiquement formées par des roues mobiles et des distributeurs, agencés en alternance selon la direction axiale de la turbomachine. Un exemple de conception d'une telle turbine est par exemple connu du document FR 3 034 129 A1. Le document US 2009/317232 A1 divulgue un distributeur avec les caractéristiques techniques de la partie caractérisante de la revendication 1. D'autres documents de l'art antérieur sont US 2009/263233 A1 et US 2014/023483 A1.

A la jonction entre une roue mobile et un distributeur situé en aval, il est classiquement observé un débit de fuite de gaz qui s'échappe d'une veine d'écoulement des gaz de la turbomachine, pour rejoindre une cavité agencée sous la plateforme radialement intérieure du distributeur. Ce débit de gaz de fuite se trouve habituellement réinjecté dans la veine en aval du distributeur, en empruntant un jeu situé entre ce dernier et la roue mobile située en aval. Par conséquent, ce débit de fuite est réinjecté dans la veine avec une direction globalement radiale, bien différente de la direction d'écoulement du flux primaire dans la veine.

Cette réintroduction du débit de fuite de gaz génère ainsi des perturbations aérodynamiques sur le flux primaire, occasionnant des pertes de rendement.

### RESUME DE L'INVENTION

Pour répondre au moins partiellement au problème mentionné ci-dessus, l'invention a tout d'abord pour objet un distributeur pour turbine de turbomachine, de préférence pour turbomachine d'aéronef, selon les caractéristiques de la revendication 1.

L'invention permet ainsi de réorienter le débit de fuite de gaz dans la veine avec une orientation circonférentielle lui conférant une direction plus proche de celle du flux primaire qui s'écoule dans la veine. Les perturbations aérodynamiques causées par la réintroduction de l'air de fuite s'en trouvent avantageusement réduites, et le rendement de la turbomachine devient de ce fait amélioré. De plus, avec la direction de réinjection présentant une orientation radiale de sorte qu'en vue selon une coupe axiale passant par l'un quelconque des orifices de réinjection de gaz, cette direction de réinjection soit parallèle ou sensiblement parallèle localement à la surface radialement extérieure de la plateforme, il est possible de se rapprocher encore davantage de la direction d'écoulement du flux primaire dans la veine, afin de le perturber le moins possible. D'une manière plus générale, il est préférentiellement fait en sorte que la direction de réinjection de l'air de fuite soit sensiblement identique à la direction d'écoulement du flux primaire dans la veine.

Lesdits orifices de réinjection de gaz débouchent sur une partie aval de la surface radialement extérieure de la plateforme, et/ou sur une partie radialement intérieure de la surface d'extrados de ladite au moins une aube. Ces zones préférées sont celles où le flux primaire présente la pression la plus faible, ce qui permet d'assurer facilement la réintroduction passive de l'air de fuite. A cet égard, il est noté que le caractère passif du système de réintroduction de gaz de fuite implique que la réinjection de gaz dans la veine s'effectue naturellement, par simple différence de pression de fluide, c'est-à-dire en particulier sans l'intervention d'un dispositif externe alimenté électriquement comme une pompe.

Le pied comporte une languette axiale s'étendant vers l'aval, et les orifices de prélèvement de gaz sont préférentiellement agencés entre la surface radialement intérieure de la plateforme, et ladite languette axiale.

La languette axiale s'étend axialement de manière à présenter une zone de recouvrement axiale avec un becquet amont d'une roue mobile agencée en aval de ce distributeur. Cela permet de limiter la réintroduction de gaz dans le fond de la cavité de fuite, délimitée radialement vers l'extérieur par la plateforme du pied.

L'invention comporte de préférence au moins l'une quelconque des caractéristiques optionnelles suivantes, prises isolément ou en combinaison.

Le distributeur comprend des canaux reliant deux à deux les orifices de prélèvement de gaz, et les orifices de réinjection de gaz situés sur la surface radialement extérieure de la plateforme. En prévoyant de simples canaux reliant le pied à la plateforme, l'invention peut aisément être mise en oeuvre, par exemple par fabrication additive de ce distributeur. Alternativement, les orifices de prélèvement et les orifices de réinjection communiquent avec une ou plusieurs cavités internes prévues dans la plateforme, de manière à faciliter la circulation de l'air, réduire la masse du distributeur, et faciliter sa fabrication.

De préférence, les orifices de prélèvement de gaz débouchent sur une surface aval du pied.

Ces orifices de prélèvement de gaz sont préférentiellement agencés sur une échasse du pied.

L'invention a également pour objet une turbine de turbomachine, de préférence pour aéronef, comprenant au moins un tel distributeur agencé entre deux roues mobiles de turbine.

Enfin, l'invention a pour objet une turbomachine, de préférence pour aéronef, comprenant au moins une telle turbine, la turbomachine étant du type turboréacteur ou turbopropulseur.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 est une vue schématique en coupe axiale d'un turboréacteur à double flux selon l'invention ;
- la figure 2 représente une vue en coupe axiale d'une partie d'une turbine du turboréacteur montré sur la figure 1 ;
- la figure 3 représente une vue en perspective d'une partie du distributeur de la turbine montrée sur la figure 2 ;
- la figure 4 représente une vue en perspective analogue à la précédente, selon un autre angle de vue ;
- la figure 5 représente une vue agrandie en coupe axiale du distributeur montré sur les figures 3 et 4 ;
- la figure 6 représente le distributeur montré sur les figures 3 à 5, en vue radiale depuis l'extérieur ;
- la figure 7 représente une vue en perspective analogue à celle de la figure 4, schématisant l'implantation privilégiée des orifices de réinjection de gaz sur la plateforme ;
- la figure 8 représente une vue en perspective analogue à celle de la figure 4, schématisant l'implantation privilégiée des orifices de réinjection de gaz sur la surface d'extrados de l'aube ; et
- la figure 9 représente une vue similaire à celle de la figure 5, avec le distributeur se trouvant selon une forme alternative de réalisation.

### EXPOSE DETAILLE DE MODES DE REALISATION PARTICULIERS

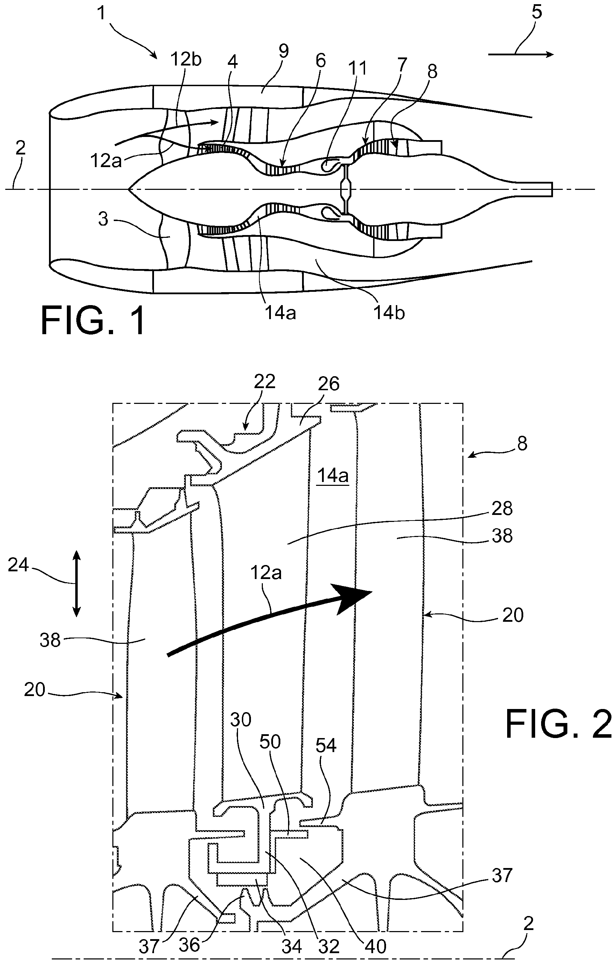

En référence tout d'abord à la figure 1, il est représenté une turbomachine 1 d'aéronef, selon un mode de réalisation préféré de l'invention. Il s'agit ici d'un turboréacteur à double flux et à double corps. Néanmoins, il pourrait s'agir d'une turbomachine d'un autre type, par exemple un turbopropulseur, sans sortir du cadre de l'invention.

La turbomachine 1 présente un axe central longitudinal 2 autour duquel s'étendent ses différents composants. Elle comprend, d'amont en aval selon une direction principale 5 d'écoulement des gaz à travers cette turbomachine, une soufflante 3, un compresseur basse pression 4, un compresseur haute pression 6, une chambre de combustion 11, une turbine haute pression 7 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine primaire 14a d'écoulement des gaz traversant les compresseurs 4, 6, la chambre de combustion 11 et les turbines 7, 8. Le flux secondaire 12b s'écoule quant à lui dans une veine secondaire 14b délimitée radialement vers l'extérieur par un carter moteur, entouré d'une nacelle 9.

La figure 2 représente de manière plus détaillée une partie de la turbine basse pression 8. Néanmoins, l'invention pourrait également s'appliquer à la turbine haute pression 7, sans sortir du cadre de l'invention.

Cette turbine 8 présente une alternance de roues mobiles 20 et de distributeurs 22. Sur la figure 2, il a été représenté deux roues mobiles 20 entre lesquelles se trouve un distributeur 22, correspondant à une portion de stator de la turbine.

Selon une direction radiale de la turbine schématisée par la flèche 24, le distributeur comporte successivement une plateforme radialement extérieure 26, des aubes 28, et un pied 32 qui présente une plateforme radialement intérieure 30. Le pied 32 présente au niveau de sa surface interne un revêtement abradable 34, coopérant avec des léchettes d'étanchéité 36 portées par des brides de fixation 37 des deux roues mobiles 20 situées de part et d'autre du distributeur 22. Ces éléments 34, 36 forment un joint d'étanchéité à labyrinthe.

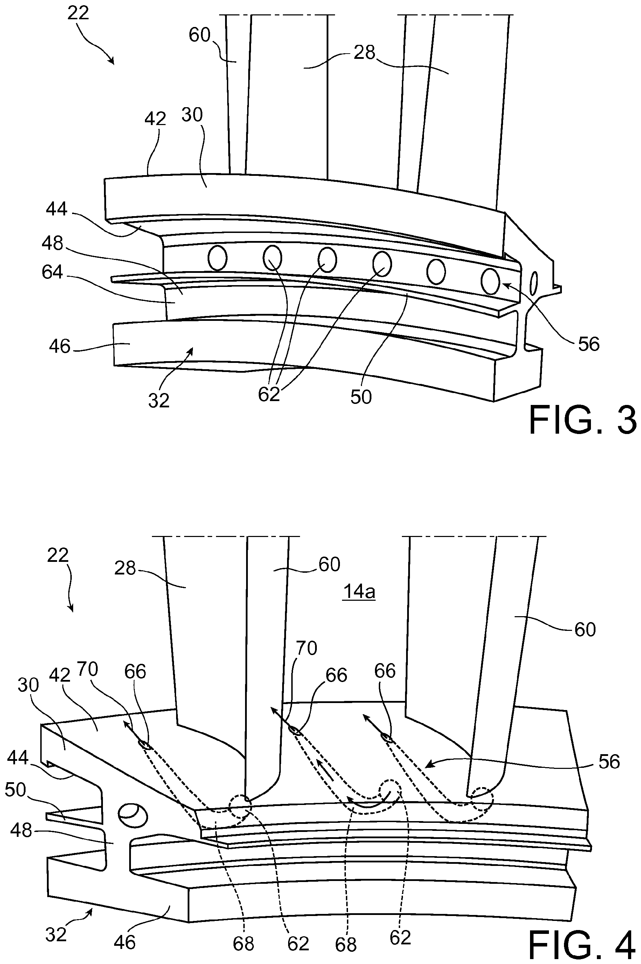

En fonctionnement, le flux primaire 12a s'écoule dans la veine 14a traversée par les aubes fixes 28, ainsi que par des aubes de rotor 38 des roues mobiles 20. Au niveau de la jonction des plateformes radialement intérieures de la roue mobile amont 20 et du distributeur 22, il est observé un débit de fuite correspondant à du gaz provenant du flux primaire 12a, qui se dirige vers une cavité de fuite 40 située sous la plateforme 30. Cette cavité 40, délimitée en partie par les brides de fixation 37 des deux roues mobiles 20, loge une partie du pied annulaire 32 du distributeur. Le gaz de fuite, après avoir transité par le joint d'étanchéité à labyrinthe 34, 36, est susceptible de s'échapper par un jeu agencé entre la plateforme 30 du distributeur 22, et la plateforme radialement intérieure de la roue mobile aval 20. Afin d'éviter cette réintroduction de gaz néfaste pour le flux primaire, l'invention prévoit la mise en oeuvre d'un système passif de réintroduction de gaz dans la veine primaire. Ce système va à présent être décrit en référence aux figures 3 à 7.

En référence à ces figures, il est tout d'abord indiqué que l'invention s'applique aussi bien à un distributeur annulaire, à savoir s'étendant sur 360°, qu'à un secteur de distributeur s'étendant sur un secteur angulaire inférieur à 360°. Dans ce dernier cas, le distributeur est classiquement obtenu par la mise bout-à-bout de plusieurs secteurs, afin de former une structure annulaire complète.

Dans la suite, il est fait référence à un « distributeur » pour désigner indifféremment un secteur angulaire inférieur à 360° destiné à former un secteur de distributeur, ou un secteur angulaire égal à 360° destiné à former l'intégralité du distributeur annulaire.

La plateforme radialement intérieure 30 présente tout d'abord une surface radialement extérieure 42 délimitant en partie la veine primaire 14a. C'est à partir de cette surface extérieure 42 que s'étendent les aubes 28, en faisant saillie radialement vers l'extérieur. La surface 42 présente ici une forme tronconique, de diamètre grandissant en allant vers l'aval. L'inclinaison radiale « Ir » de cette surface 42 est de l'ordre de -45 à 45°. Elle correspond en coupe axiale à l'angle « Ir » entre la surface 42 et la direction axiale parallèle à l'axe 2.

D'autre part, la plateforme radialement intérieure 30 présente une surface radialement intérieure 44 délimitant en partie la cavité de fuite de gaz 40, agencée sous la plateforme 30. C'est à partir de cette surface intérieure 44 que s'étend le reste du pied 32, en faisant saillie radialement vers l'intérieur. Ce pied 32 comporte effectivement plusieurs parties, et en particulier un bulbe 46 correspondant à une portion massive formant la périphérie intérieure du pied, ainsi qu'une échasse 48 de forme plus effilée, assurant la jonction mécanique entre le bulbe 46 et la plateforme 30. Le bulbe 46 présente au niveau de sa surface interne le revêtement abradable précité, ce revêtement disposant de caractéristiques lui permettant de s'user facilement et d'être de faible masse. Par exemple, ce revêtement abradable est réalisé en nid-d'abeilles.

En outre, le pied comporte une languette axiale 50 se projetant vers l'aval à partir de l'échasse 48, sensiblement orthogonalement à celle-ci. Cette languette 50 s'étend circonférentiellement sur la même étendue angulaire que le reste du distributeur 22. Elle s'étend par ailleurs axialement de sorte qu'un becquet amont 54 de la roue mobile aval 20 présente une zone de recouvrement axiale avec cette languette 50 ainsi qu'avec la plateforme 30, comme cela est visible sur la figure 2. Les parties qui se recouvrent selon la direction axiale se succèdent ainsi les unes les autres selon la direction radiale 24. Il est noté que la languette axiale 50 se chevauche avec le becquet amont 54 pour limiter la réintroduction de gaz dans le fond de la cavité 40.

L'une des particularités de l'invention réside dans l'implantation d'un système passif de réintroduction de gaz de fuite dans la veine primaire 14a. Ce système 56 est directement intégré au distributeur 22, et sa nature passive nécessite uniquement la formation d'orifices, de canaux, de cavités, ou d'éléments similaires. En effet, pour assurer cette réintroduction d'une partie au moins des gaz de fuite, ces derniers sont prélevés au niveau du pied 32 puis réinjectés au niveau d'une ou plusieurs zones du distributeur 22 dans lesquelles la pression du flux primaire 12a est inférieure à celle des gaz de fuite dans la cavité. En d'autres termes, des zones de faibles pressions observées sur la surface extérieure 42 de la plateforme 30, et/ou sur une surface d'extrados 60 des aubes 28, sont mises à profit pour engendrer une aspiration des gaz situés dans la cavité de fuite 40. Il n'est de ce fait requis aucun dispositif externe alimenté électriquement, de sorte que le rendement global de la turbomachine ne s'en trouve pas dégradé.

Pour ce faire, le système 56 comprend des orifices 62 de prélèvement de gaz, débouchant de préférence sur une surface aval de l'échasse 48, entre la surface 44 de la plateforme 30 et la languette axiale 50. Néanmoins, ces orifices de prélèvement 62 pourraient être agencés à d'autres endroits sur le pied 32, et en particulier en tout point de l'échasse 48 y compris sous la languette axiale 50, ou encore sur la surface radialement intérieure 44 de la plateforme 30.

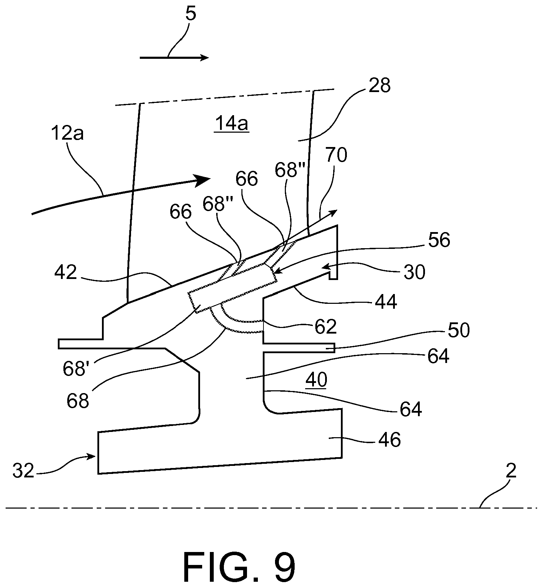

Il s'agit par exemple d'une rangée annulaire d'orifices de prélèvement 62, centrée sur l'axe 2. Le système comporte également des orifices 66 de réinjection de gaz dans la veine primaire 14a. Ces orifices 66 débouchent sur la surface extérieure 42 de la plateforme 30, de préférence sur une partie aval de cette surface 42 où la pression du flux primaire 12a est la plus faible. Pour relier deux à deux ces orifices 62, 66, le système de réintroduction 56 comprend des canaux 68 s'étendant dans la matière de l'échasse 48 et de la plateforme 30. Ces canaux peuvent être réalisés à l'aide de noyaux dans le cas d'une fabrication du distributeur 22 par fonderie. Ils peuvent également être obtenus facilement lors d'une réalisation du distributeur 22 par fabrication additive. Par ces mêmes techniques de fabrication, il est possible d'aboutir à une alternative de réalisation dans laquelle les orifices 62, 66 communiquent avec une ou plusieurs cavités internes 68' prévues dans la plateforme 30, comme cela est schématisé sur la figure 9. En d'autres termes, chaque cavité interne 68' est prévue pour assurer la communication entre un ou plusieurs orifices de prélèvement 62, et un ou plusieurs orifices de réinjection 66. Par exemple, il peut s'agir d'une unique cavité interne telle qu'une cavité interne annulaire 68' assurant la communication entre tous les orifices 62, 66. Cette alternative de réalisation facilite la production du distributeur selon l'invention, et/ou améliore sa performance en diminuant sa masse. De plus, la circulation d'air y est facilitée.

Dans cette autre configuration, des canaux 68 peuvent être conservés entre les orifices de prélèvement 62 et la/les cavités internes 68', de même que des canaux 68" peuvent être agencés pour relier les orifices de réinjection 70 aux cavités internes 68'.

L'un des avantages procurés par la réintroduction de gaz via le distributeur 22 réside dans la possibilité d'appliquer la direction désirée au flux de gaz de fuite réinjecté dans la veine primaire 14a. Cette direction de réinjection, schématisée par les flèches 70 et définie par la forme des orifices 66 et des canaux 68, peut ainsi être identique ou sensiblement identique à la direction d'écoulement du flux primaire 12a dans la veine primaire, à proximité des orifices 66 de réinjection de gaz. Cette direction de réinjection 70 s'avère par conséquent inclinée circonférentiellement, autrement dit à orientation circonférentielle, comme cela va être précisé ci-après.

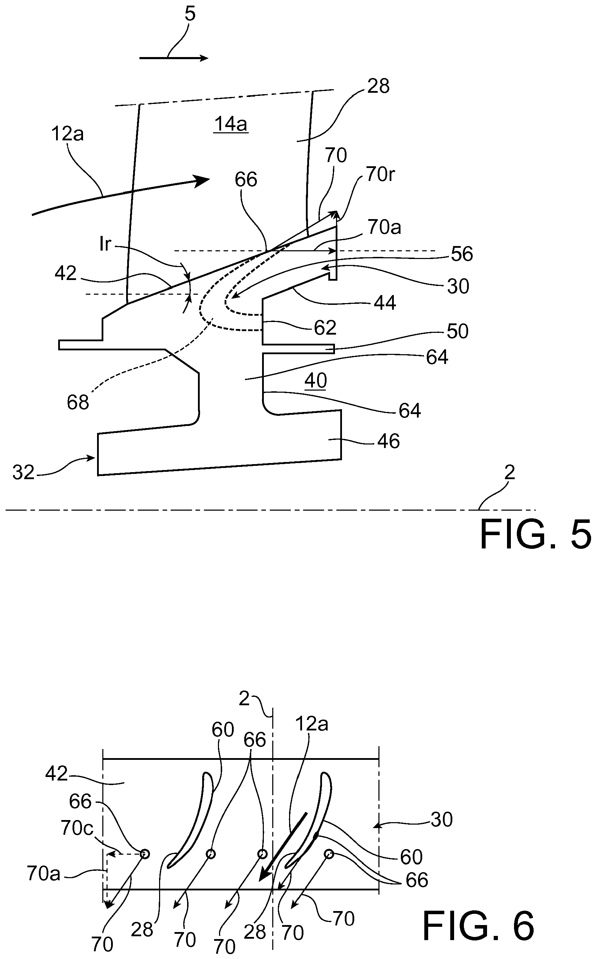

En particulier, la direction de réinjection 70 présente en effet une orientation circonférentielle 70c schématisée sur la figure 6, de sens identique à celui de l'orientation circonférentielle classiquement observée sur le flux primaire 12a, localement à proximité de l'orifice 66 concerné. De ce fait, en vue radiale depuis l'extérieur telle que celle de la figure 6, la direction de réinjection 70 peut être parallèle ou sensiblement parallèle à la direction du flux primaire 12a, puisque ces deux directions présentent la même ou sensiblement la même orientation circonférentielle. A cet égard, il est noté qu'un écart angulaire de plus ou moins 10° est préférentiellement toléré entre les deux orientations circonférentielles de ces directions.

Ainsi, grâce à cette seule orientation circonférentielle 70c, également dite composante circonférentielle ou tangentielle présentant bien évidemment une valeur non nulle, le flux de gaz de fuite est réinjecté dans la veine primaire 14a avec une direction se rapprochant fortement de celle du flux primaire 12a. Par conséquent, les perturbations aérodynamiques causées par la réintroduction de l'air de fuite dans la veine s'en trouvent avantageusement réduites.

Pour réduire encore davantage ces perturbations, la direction de réinjection 70 présente également une orientation radiale 70r, schématisée sur la figure 5. L'orientation radiale 70r est retenue de sorte qu'en vue selon une coupe axiale passant par l'un quelconque des orifices 66 telle que la coupe de la figure 5, la direction de réinjection 70 soit parallèle ou sensiblement parallèle localement à la surface 42 de la plateforme 30. Quelques degrés d'écart sont tolérés, par exemple jusqu'à 5 à 10°, comme cela est visible sur la figure 5. Ici également, il est précisé que le fait de présenter une orientation radiale implique que la direction de réinjection comprend une composante radiale non nulle.

Ainsi, l'orientation / la composante circonférentielle 70c, l'orientation / la composante radiale 70r, et l'orientation / la composante axiale 70a forment une direction de réinjection 70 identique ou sensiblement identique à la direction d'écoulement du flux primaire 12a dans la veine primaire, à proximité des orifices 66 de réinjection de gaz qui prennent ici aussi la forme d'une rangée annulaire centrée sur l'axe 2. D'autres agencements de ces orifices de réinjection 66 sont également possibles, sans sortir du cadre de l'invention.

A cet égard, il est indiqué que la localisation privilégiée des orifices 66 sur la surface 42 de la plateforme se trouve bien dans une partie aval 72 de celle-ci, proche de l'extrémité aval de la plateforme et de préférence sensiblement au même niveau que les bords de fuite des aubes 28, comme cela est schématisé sur la figure 6.

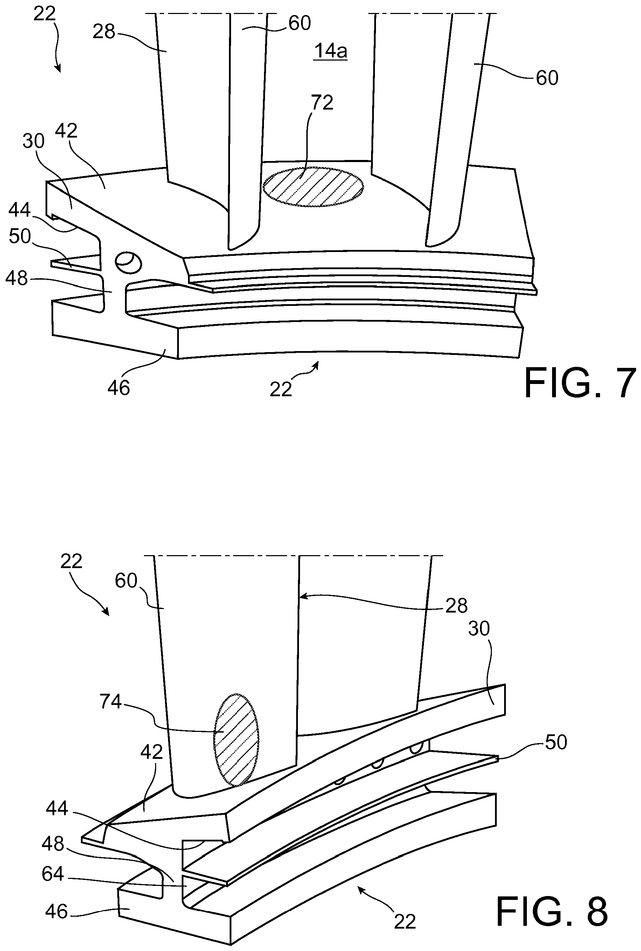

Alternativement ou simultanément, des orifices 66 de réinjection de gaz pourraient être prévus sur la surface d'extrados 60 de certaines ou de chacune des aubes 28 du distributeur 22. Dans ce cas de figure, l'emplacement privilégié des orifices se situe dans une partie radialement intérieure 74 de cette surface, à proximité de la jonction avec la plateforme 30, comme cela a été schématisé sur la figure 8. La liaison entre les orifices de prélèvement et les orifices de réinjection s'effectue alors de manière analogue, à l'aide de canaux et/ou de cavités permettant leur communication fluidique. Les orifices 66 de la partie radialement intérieure 74 ont été représentés schématiquement sur la figure 6.

Dans les deux cas, les parties 72, 74 sont des zones préférées où le flux primaire 12a présente la pression la plus faible, ce qui permet d'assurer facilement la réintroduction passive de l'air de fuite dans la veine 14a, sans dégradation des performances.

Bien entendu, diverses modifications peuvent être apportées par l'homme du métier à l'invention qui vient d'être décrite, uniquement à titre d'exemples non limitatifs et dans la limite de la portée conférée par les revendications annexées.

## Revendications

1. Distributeur (22) pour turbine de turbomachine comprenant au moins une aube (28) et un pied (32) qui présente une plateforme (30), la plateforme (30) comprenant d'une part une surface radialement extérieure (42) à partir de laquelle s'étend chaque aube (28) et destinée à délimiter en partie une veine (14a) d'écoulement des gaz de la turbomachine, et d'autre part une surface radialement intérieure (44) destinée à délimiter en partie une cavité de fuite de gaz (40) radialement sous la plateforme (30),
le distributeur est équipé d'un système passif (56) de réintroduction de gaz de fuite dans la veine, le système comprenant des orifices de prélèvement de gaz (62) situés sur le pied (32), ainsi que des orifices de réinjection de gaz (66) situés sur la surface radialement extérieure (42) de la plateforme (30) et/ou sur une surface d'extrados (60) de ladite au moins une aube (28), lesdits orifices de réinjection de gaz (66) étant configurés pour réorienter le flux de gaz issu de la cavité de fuite de gaz (40) selon une direction réinjection (70) comprenant une orientation circonférentielle (70c), et en ce que ladite direction de réinjection (70) présente une orientation radiale (70r) de sorte qu'en vue selon une coupe axiale passant par l'un quelconque des orifices de réinjection de gaz (66), cette direction de réinjection (70) soit parallèle ou sensiblement parallèle localement à la surface radialement extérieure (42) de la plateforme,
**caractérisé en ce que** lesdits orifices de réinjection de gaz (66) débouchent sur une partie aval (72) de la surface radialement extérieure (42) de la plateforme, et/ou sur une partie radialement intérieure (74) de la surface d'extrados (60) de ladite au moins une aube (28),
et **en ce que** le pied (32) comporte une languette axiale (50) s'étendant vers l'aval, les orifices de prélèvement de gaz (62) étant agencés entre la surface radialement intérieure (44) de la plateforme, et ladite languette axiale (50) s'étendant axialement de manière à présenter une zone de recouvrement axiale avec un becquet amont (54) d'une roue mobile (20) agencée en aval du distributeur.

2. Distributeur selon la revendication 1, **caractérisé en ce qu'**il comprend des canaux (68) reliant deux à deux les orifices de prélèvement de gaz (62), et les orifices de réinjection de gaz (66) situés sur la surface radialement extérieure (42) de la plateforme (30), ou **en ce que** les orifices de prélèvement et les orifices de réinjection (62, 66) communiquent avec une ou plusieurs cavités internes (68') prévues dans la plateforme (30).

3. Distributeur selon l'une quelconque des revendications précédentes, **caractérisé en ce que** les orifices de prélèvement de gaz (62) débouchent sur une surface aval (64) du pied (32).

4. Distributeur selon l'une quelconque des revendications précédentes, **caractérisé en ce que** les orifices de prélèvement de gaz (62) sont agencés sur une échasse (48) du pied (32).

5. Turbine (8) de turbomachine, de préférence pour aéronef, comprenant au moins un distributeur selon l'une quelconque des revendications précédentes, agencé entre deux roues mobiles de turbine (20).

6. Turbomachine (1), de préférence pour aéronef, comprenant au moins une turbine (8) selon la revendication précédente.

## Patentansprüche

1. Turbinendüse (22) für eine Turbotriebwerkturbine, umfassend mindestens eine Leitschaufel (28) und einen Fuß (32), der eine Plattform (30) aufweist, wobei die Plattform (30) umfassend einerseits eine radial äußere Oberfläche (42) umfasst, von der sich jede Leitschaufel (28) erstreckt und die dazu bestimmt ist, einen Gasstrahl (14a) aus dem Turbotriebwerk teilweise abzugrenzen, und andererseits eine radial innere Oberfläche (44), die dazu bestimmt ist, einen Gasdurchblashohlraum (40) radial unter der Plattform (30) teilweise abzugrenzen,
wobei die Turbinendüse mit einem passiven System (56) zum Wiedereinleiten von Blow-by-Gas in den Strahl ausgestattet ist, wobei das System Gasentnahmeöffnungen (62) umfasst, die sich am Fuß (32) befinden, sowie Gasrückführungsöffnungen (66), die sich auf der radial äußeren Oberfläche (42) der Plattform (30) und/oder auf einer Außenfläche (60) der mindestens einen Leitschaufel (28) befinden, wobei die Gasrückführungsöffnungen (66) so konfiguriert sind, dass sie den Gasstrom aus dem Gasdurchblashohlraum (40) in eine Rückführungsrichtung (70), die eine Umfangsausrichtung (70c) umfasst, umleiten, und dadurch, dass die Rückführungsrichtung (70) eine radiale Ausrichtung (70r) aufweist, so dass sie in der Ansicht eines axialen Schnitts, der durch eine der Gasrückführungsöffnungen (66) verläuft, diese Rückführungsrichtung (70) entweder parallel oder im Wesentlichen lokal zur radial äußeren Oberfläche (42) der Plattform verläuft,
**dadurch gekennzeichnet, dass** die Gasrückführungsöffnungen (66) in einen stromabwärtigen Teil (72) der radial äußeren Oberfläche (42) der Plattform und/oder in einen radial inneren Teil (74) der Außenfläche (60) der mindestens einen Leitschaufel (28) münden,
und dadurch, dass der Fuß (32) eine axiale Zunge (50) aufweist, die sich stromabwärts erstreckt, wobei die Gasentnahmeöffnungen (62) zwischen der radial inneren Oberfläche (44) der Plattform und der axialen Zunge (50) angeordnet sind, die sich derart axial erstreckt, dass sie eine axiale Überlappungszone mit einem stromaufwärtigen Spoiler (54) eines beweglichen Rades (20) darstellt, das stromabwärts der Turbinendüse angeordnet ist.

2. Turbinendüse nach Anspruch 1, **dadurch gekennzeichnet, dass** sie Kanäle (68) aufweist, die die Gasentnahmeöffnungen (62) und die Gasrückführungsöffnungen (66), die sich auf der radial äußeren Oberfläche (42) der Plattform (30) befinden, paarweise miteinander verbinden, oder dadurch, dass die Entnahmeöffnungen und die Rückführungsöffnungen (62, 66) mit einem oder mehreren inneren Hohlräumen (68'), die in der Plattform (30) vorgesehen sind, in Verbindung stehen.

3. Turbinendüse nach einem der vorhergehenden Ansprüche, **dadurch gekennzeichnet, dass** die Gasentnahmeöffnungen (62) auf einer stromabwärtigen Oberfläche (64) des Fußes (32) münden.

4. Turbinendüse nach einem der vorhergehenden Ansprüche, **dadurch gekennzeichnet, dass** die Gasentnahmeöffnungen (62) auf einer Stelze (48) des Fußes (32) angeordnet sind.

5. Turbine (8) eines Turbotriebwerks, vorzugsweise für Flugzeuge, umfassend mindestens eine Turbinendüse nach einem der vorhergehenden Ansprüche, die zwischen zwei beweglichen Turbinenrädern (20) angeordnet ist.

6. Turbotriebwerk (1), vorzugsweise für Flugzeuge, umfassend mindestens eine Turbine (8) nach dem vorhergehenden Anspruch.

## Claims

1. Turbine nozzle (22) for a turbine engine comprising at least one vane (28) and a foot (32) which has a platform (30), the platform (30) comprising on one hand a radially external surface (42) from which each vane (28) extends and intended to be partially delimit a gas jet (14a) from the turbine engine, and on the other a radially internal surface (44) intended to partially delimit a gas blow-by cavity (40) radially under the platform (30),
the nozzle is equipped with a passive system (56) for reintroducing blow-by gas into the jet, the system comprising gas extraction orifices (62) located on the foot (32), as well as gas reinjection orifices (66) located on the radially external surface (42) of the platform (30) and/or on an upper surface (60) of said at least one vane (28), said gas reinjection orifices (66) being configured to redirect the gas flow from the gas blow-by cavity (40) along a reinjection direction (70) comprising a circumferential orientation (70c), and in that said reinjection direction (70) has a radial orientation (70r) such that, viewed along an axial cross-section through any one of the gas reinjection orifices (66), this reinjection direction (70) is parallel or substantially parallel locally with the radially external surface (42) of the platform,
**characterised in that** said gas reinjection orifices (66) open onto a downstream part (72) of the radially external surface (42) of the platform, and/or onto a radially internal part (74) of the upper surface (60) of said at least one vane (28),
and **in that** the foot (32) includes an axial tab (50) extending downstream, the gas extraction orifices (62) being arranged between the radially internal surface (44) of the platform, and said axial tab (50), said axial tab (50) extending axially so as to have an axial overlap zone with an upstream spoiler (54) of a mobile wheel (20) arranged downstream from the nozzle.

2. Nozzle according to claim 1, **characterised in that** it comprises channels (68) connecting pairwise the gas extraction orifices (62), and the gas reinjection orifices (66) located on the radially external surface (42) of the platform (30), or **in that** the extraction orifices and the reinjection orifices (62, 66) communicate with one or more internal cavities (68') provided in the platform (30).

3. Nozzle according to any one of the preceding claims, **characterised in that** the gas extraction orifices (62) open onto a downstream surface (64) of the foot (32).

4. Nozzle according to any one of the preceding claims, **characterised in that** the gas extraction orifices (62) are arranged on a stilt (48) of the foot (32).

5. Turbine (8) for a turbine engine, preferably for aircraft, comprising at least one nozzle according to any one of the preceding claims, arranged between two mobile turbine wheels (20).

6. Turbine engine (1), preferably for aircraft, comprising at least one turbine (8) according to the preceding claim.
